# EUROPÄISCHE PATENTSCHRIFT

(11) **EP 0 631 364 B1**
(45) Veröffentlichungstag und Bekanntmachung des Hinweises auf die Patenterteilung: **26.02.1997**
(21) Anmeldenummer: 94109277.7
(22) Anmeldetag: 16.06.1994
(51) Int. Cl.: H02K 1/27, H02K 15/03

(54) **Rotor und Verfahren zur Herstellung desselben**
Rotor and its manufacturing process
Rotor et procédé de fabrication de celui-ci

(30) Priorität: 24.06.1993 DE 4320894
(43) Veröffentlichungstag der Anmeldung: 28.12.1994
(73) Patentinhaber: PILLER-GmbH, 37520 Osterode am Harz (DE)
(72) Erfinder:
(74) Vertreter: Hoeger, Stellrecht & Partner

(56) Entgegenhaltungen:
- EP-A- 0 043 981
- EP-A- 0 212 552
- EP-A- 0 548 608
- WO-A-91/10277
- DE-A- 3 224 904
- DE-U- 8 427 704

## Beschreibung

Die Erfindung betrifft einen Rotor für elektrische Maschinen, insbesondere für Maschinen mit hoher Drehzahl, mit einem Rotorkern und einem Rotormantel, welcher eine den Rotorkern radial stützende Bandage aus faserverstärktem Kunststoff umfaßt.

Darüber hinaus betrifft die Erfindung ein Verfahren zum Herstellen eines einen Rotorkern und einen Rotormantel umfassenden Rotors für elektrische Maschinen, insbesondere für Maschinen mit hoher Drehzahl, dessen Rotormantel eine den Rotorkern radial stützende Bandage aus faserverstärktem Kunststoff umfaßt.

Unter hoher Drehzahl werden dabei Umdrehungen von mehr als 18.000 U/min. verstanden, insbesondere um Drehungen zwischen ungefähr 18.000 und ungefähr 120.000 U/min.

Derartige Rotoren sind insbesondere Rotoren für permanent erregte elektrische Maschinen, wobei insbesondere hoch-remanente Permanentmagnete zum Einsatz kommen, die wegen ihrer inneren Gefügestruktur sehr spröde und sehr empfindlich gegenüber Stoßbelastungen und Zugspannungen sind und daher nicht als tragendes Material verwendet werden können, da sie nicht in der Lage sind, Zugspannungen aufzunehmen.

Derartige Permanentmagnete werden dabei im Rotorkern angeordnet und Zugspannungen in diesen Permanentmagneten werden durch den Rotormantel kompensiert.

Derartige Rotoren sind beispielsweise aus der DE-OS 32 24 904 bekannt.

Diese Druckschrift beschreibt einerseits die Verwendung eines metallischen Rotormantels, welcher als sogenannter "Panzer" auf einen Rotorkern mit einer konischen Außenmantelfläche aufgeschoben wird.

Ein derartiger metallischer Mantel hat jedoch eine Vielzahl von Nachteilen, insbesondere bei Verwendung des Rotors für hohe Drehzahlen.

Aus diesem Grund wird in der DE-OS 32 24 904 ebenfalls ein Rotormantel aus faserverstärktem Kunststoff beschrieben, wobei der Rotormantel durch eine zylindrisch gewickelte Faserbandage mit einer zylindrischen Innenfläche gebildet wird.

Um eine Vorspannung in diesem Rotormantel mit einer Bandage aus faserverstärktem Kunststoff zu erreichen, sind an mehreren umfangsseitigen Stellungen des Rotorkerns gegenläufig verschiebbare Keile vorgesehen, welche zu einer radialen Kraft auf den Rotormantel im Bereich der Keile führen.

Dieses Verkeilen des Rotormantels führt jedoch dazu, daß einerseits auf den Rotormantel im Bereich der Keile große radiale Kräfte wirken, andererseits die Vorspannung, mit welcher der Rotormantel zwischen den Keilen auf den Rotorkern wirkt, weitaus geringer ist und insbesondere der Rotormantel nicht vollflächig auf dem Rotorkern aufliegt.

Ferner ist aus der Stand der Technik gemäß Art. 54(3) EPÜ bildenden EP A 0 548 608 ein Rotor für Maschinen mit hoher Drehzahl bekannt, welcher einen Rotorkern und einen Rotormantel umfaßt, wobei der Rotorkern eine leicht konische Außenmantelfläche aufweist, auf welcher der eine Bandage aus faserverstärktem Kunststoff umfassende Rotormantel sich mit einer denselben Konuswinkel aufweisenden Innenmantelfläche abstützt.

Der Erfindung liegt ausgehend von der DE OS 32 24 904 die Aufgabe zugrunde, einen Rotor der eingangs beschriebenen Art derart zu verbessern, daß der Rotormantel im wesentlichen vollflächig und mit im wesentlichen gleichmäßiger Flächenbelastung auf dem Rotorkern aufliegt.

Diese Aufgabe wird bei einem Rotor der eingangs beschriebenen Art gemäß Anspruch 1 dadurch gelöst, daß der Rotorkern eine Außenmantelfläche mit einem kleinen Konuswinkel aufweist, auf welcher sich der Rotormantel mit einer denselben Konuswinkel aufweisenden Innenmantelfläche abstützt und daß der Rotormantel zwischen der Innenmantelfläche und der Bandage eine Beschädigungen und korrosion verhindernde Schutzschicht aufweist.

Der Vorteil der erfindungsgemäßen Lösung ist darin zu sehen, daß die Verwendung einer konischen Außenmantelfläche und einer entsprechenden Innenmantelfläche durch die vorgesehene Schutzschicht ohne Beschädigung der Bandage möglich ist, daß darüber hinaus die Schutzschicht eine Beschädigung der Fasern der Bandage durch Reibung auf dem Rotorkern, beispielsweise während der Drehzahlwechsel, verhindert und daß außerdem noch die Schutzschicht eine Korrosion zwischen der Bandage und dem Material des Rotorkerns, welches vorzugsweise Stahl ist, verhindert.

Die Schutzschicht kann prinzipiell beliebig ausgebildet sein. Um eine besonders stabile Schutzschicht herzustellen ist vorzugsweise vorgesehen, daß die Schutzschicht eine Trägerlage umfaßt.

Als Trägerlage sind die unterschiedlichsten Schichtmaterialien denkbar, wobei diese Materialien allerdings in der Lage sein sollten, den auftretenden Druckkräften Stand zu halten. Ein besonders vorteilhaftes Ausführungsbeispiel sieht vor, daß die Trägerlage von einem Bindemittel durchsetzt ist und beide zusammen die Schutzschicht bilden, so daß das Bindemittel zur Stabilisierung und Verfestigung der Trägerlage beitragen kann, um die erforderlichen Festigkeitswerte zu erreichen.

Die Schutzschicht kann prinzipiell in unterschiedlichster Art und Weise mit der Bandage verbunden werden. Beispielsweise ist es denkbar, die Schutzschicht mit einer separat gefertigten Bandage zu verbinden.

Noch vorteilhafter ist es jedoch, wenn das Bindemittel mit einem Matrixmaterial einer die Fasern der Bandage einbindenden Kunststoffmatrix identisch ist. In diesem Fall ist durch die Identität des Matrixmaterials eine optimale Verträglichkeit zwischen dem Bindemittel der Schutzschicht und der Bandage erreicht.

Eine besonders zweckmäßige Lösung sieht vor, daß die Kunststoffmatrix die Bandage und die Trägerlage als durchgängige Kunststoffmatrix durchsetzt und insbesondere dabei ein integrales Bauteil entsteht, welches sowohl die Schutzschicht als auch die Bandage umfaßt, wobei der integrale Charakter dieses Bauteils durch die durchgängige Kunststoffmatrix bedingt ist.

Hinsichtlich der Trägerlage sind die unterschiedlichsten Materialien denkbar. So sieht ein Ausführungsbeispiel vor, daß die Trägerlage aus einem Vlies, vorzugsweise einem Polyestervlies ist. Alternativ dazu ist es ebenfalls denkbar, die Trägerlage aus einem Fasergewebe, beispielsweise einem Glasfasergewebe herzustellen.

Als Matrixmaterial kommt vorzugsweise Kunstharz zum Einsatz.

Hinsichtlich der Verbindung zwischen dem Rotormantel und dem Rotorkern wurden im Zusammenhang mit der bisherigen Erläuterung einzelner Ausführungsbeispiele keine näheren Angaben gemacht. So ist es beispielsweise vorteilhaft, den Rotormantel auf dem Rotorkern dadurch zu fixieren, daß der Konuswinkel im Bereich eines selbsthemmenden Konus liegt, so daß keine gesonderten Maßnahmen zur Verbindung von Rotormantel und Rotorkern erforderlich sind.

Insbesondere aufgrund der hohen Drehzahlen und der Wechsel- und Dauerbelastungen hat es sich jedoch insbesondere in Ergänzung zu einem selbsthemmenden Konuswinkel als vorteilhaft erwiesen, wenn der Rotormantel mit einer zwischen der Innenmantelfläche desselben und der Außenmantelfläche des Rotorkerns liegenden Haftvermittlerschicht auf dem Rotorkern gehalten ist. Die Haftvermittlerschicht kann dabei ebenfalls in unterschiedlichster Art und Weise ausgebildet sein.

Besonders vorteilhaft ist es, wenn die Haftvermittlerschicht durch eine ausgehärtete fließfähige Masse gebildet ist, da sich eine derartige Haftvermittlerschicht in ihrem fließfähigen Zustand einfach zwischen die Innenmantelfläche des Rotormantels und die Außenmantelfläche des Rotorkerns einbringen läßt.

Noch vorteilhafter ist es, wenn die die Haftvermittlerschicht bildende fließfähige Masse im nicht ausgehärteten Zustand eine Gleitschicht zwischen der Außenmantelfläche des Rotorkerns und der Innenmantelfläche des Rotormantels bildet, da eine derartige Gleitschicht das Aufschieben des Rotormantels auf den Rotorkern erleichtert.

Ein besonders günstiges Ausführungsbeispiel sieht vor, daß die die Haftvermittlerschicht bildende Masse eine den Rotorkern und den Rotormantel verbindende Klebemasse ist, so daß die Verbindung zwischen Rotorkern und Rotormantel nicht nur durch den selbsthemmend gewählten Konuswinkel aufrecht erhalten bleibt, sondern noch zusätzlich durch die Klebewirkung der Masse gesichert ist.

Ein vorteilhaftes Ausführungsbeispiel sieht vor, daß die Masse ein Kunstharz ist.

Hinsichtlich der Art der Ausbildung der Bandage wurden im Zusammenhang mit den bislang beschriebenen Ausführungsbeispielen keine näheren Angaben gemacht. So sieht ein vorteilhaftes Ausführungsbeispiel vor, daß die Bandage mit in radialer Richtung wirkender Vorspannung auf den Rotorkern wirkt, um die im Rotorkern wirksamen Zentrifugalkräfte bei hohen Drehzahlen zu kompensieren.

Ein besonders zweckmäßiges Ausführungsbeispiel der erfindungsgemäßen Lösung sieht vor, daß die Bandage mit in einer Umfangsrichtung oder Azimutalrichtung im wesentlichen konstanten radialen Vorspannung auf den Rotorkern wirkt, das heißt, daß die Bandage an jeder Stelle des Umfangs mit derselben Kraft in radialer Richtung auf den Rotorkern und umgekehrt wirkt, so daß keine lokalen Spitzenbelastungen in einzelnen Bereichen der Bandage auftreten, was dann von Vorteil ist, wenn die Bandage möglichst dünn dimensioniert sein soll und andererseits aber ausreichend stabil sein und auch eine hohe Lebensdauer bei hohen Drehzahlen aufweisen soll.

Besonders vorteilhaft hat es sich erwiesen, wenn die Bandage eine im wesentlichen koaxial zum Rotorkern spiralförmig gewickelte Faser umfaßt.

Vorzugsweise ist dabei die Bandage so hergestellt, daß sie spiralförmig gewickelte Faserlagen umfaßt.

Um einen Rotormantel mit einer konischen oder kegelförmigen Innenmantelfläche möglichst einfach und unter möglichst großer Stabilität der Bandage herzustellen, ist vorteilhafterweise vorgesehen, daß eine der Innenmantelfläche zugewandte innere Faserlage der Bandage eine konische Lagenfläche bildet, wobei diese konische Lagenfläche insbesondere denselben Konuswinkel wie die Innenmantelfläche aufweist.

Noch vorteilhafter ist es, wenn die Bandage mehrere, konische Lagenflächen bildende Faserlagen umfaßt.

Ein besonders vorteilhaftes Ausführungsbeispiel sieht vor, daß die Bandage eine zylindrische Außenmantelfläche aufweist, dies hat den großen Vorteil, daß die Bandage, an dem Ende, an dem der Konus der Außenmantelfläche des Rotorkerns den geringsten Durchmesser hat, die größte Dicke hat und somit an dieser Stelle eine größere Stabilität hat, was sich vorteilhaft dann auswirkt, wenn die Bandage an diesem Ende beaufschlagt werden soll, um auf den Rotorkern aufgeschoben zu werden.

Der Erfindung liegt ferner die Aufgabe zugrunde, ein Verfahren der eingangs genannten Art derart zu verbessern, daß ein Rotor herstellbar ist, dessen Rotormantel im wesentlichen vollflächig und im wesentlichen gleichmäßig auf dem Rotorkern aufliegt.

Diese Aufgabe wird bei einem Verfahren der eingangs beschriebenen Art gemäß Anspruch 17 dadurch gelöst, daß der Rotorkern mit einer axialsymmetrischen Außenmantelfläche mit einem kleinen Konuswinkel hergestellt wird, daß der Rotormantel mit einer denselben Konuswinkel aufweisenden Innenmantelfläche mit Untermaß gegenüber der Außenmantelfläche hergestellt wird, daß der Rotormantel zur Ausbildung einer vollflächigen gleichmäßigen Auflage mit seiner Innenmantelfläche auf die Außenmantelfläche des Rotorkerns in axialer Richtung aufgeschoben wird und daß zum Aufschieben des Rotormantels auf den Rotorkern eine aushärtbare fließfähige Masse zwischen die Innenmantelfläche und die Außenmantelfläche als Gleithilfe eingebracht wird.

Mit der erfindungsgemäßen Lösung ist eine besonders einfache Möglichkeit geschaffen, einen Rotormantel mit seiner konischen Innenmantelfläche auf die Außenmantelfläche des Rotorkerns aufzubringen, und zwar so, daß beim Aufschieben des Rotormantels auf den Rotorkern im Rotormantel die gewünschte und definierte Vorspannung erreicht wird, ohne daß dabei der Rotormantel, insbesondere die Bandage desselben, beschädigt werden. Die fließfähige Masse dient dabei beim Aufschieben des Rotormantels als Gleithilfe und härtet nachher aus, so daß insbesondere im Fall eines selbsthemmenden Konuswinkels, bereits aufgrund der Reibung zwischen der ausgehärteten fließfähigen Masse und der Außenmantelfläche sowie der Innenmantelfläche ein Abgleiten des Rotormantels vom Rotorkern verhindert wird.

Die aushärtbare Masse wird dabei vorzugsweise nach dem Aufschieben des Rotormantels auf den Rotorkern ausgehärtet und zwar insbesondere bei extern relativ zum Rotorkern fixiertem Rotormantel.

Noch vorteilhafter ist die erfindungsgemäße Lösung dann, wenn als fließfähige Masse eine im ausgehärteten Zustand zwischen Rotormantel und Rotorkern als Klebemasse wirkende Masse verwendet wird, so daß eine Sicherung des Rotormantels gegenüber dem Rotorkern nicht nur durch den selbsthemmenden Konuswinkel erfolgt, sondern noch zusätzlich durch die Haftwirkung der fließfähigen Masse auf die Außenmantel- und Innenmantelflächen.

Der Rotorkern hat üblicherweise eine Erstreckung in axialer Richtung, die vollständig von dem Rotormantel im fertig montierten Zustand überdeckt sein soll. Dies hat zwangsläufig zur Folge, daß bei Herstellung eines Rotormantels mit einer Innenmantelfläche, die Untermaß gegenüber der Außenmantelfläche des Rotorkerns aufweist, der Rotormantel nur über eine geringe Strecke auf den Rotorkern aufgeschoben werden kann.

Um das Aufschieben des Rotormantels zu erleichtern, ist vorzugsweise vorgesehen, daß der Rotorkern an seinem den kleineren Durchmesser aufweisenden Ende mit einem eine Fortsetzung der Außenmantelfläche bildenden Hilfskegel zum Aufschieben des Rotormantels versehen ist. Dieser Hilfskegel hat den großen Vorteil, daß er die Möglichkeit schafft, den Rotormantel mit seiner Innenmantelfläche auf eine durch den Rotorkern und den Hilfskegel gebildeten durchgängigen Kegelfläche mit seiner Innenmantelfläche vollflächig aufzulegen und somit beim Aufschieben eine konstante vollflächig auf den Rotormantel wirkende aufweitende Kraft zu erhalten, die letztlich dann zur Vorspannung des Rotormantels auf dem Rotorkern führt.

Vorzugsweise wird der Hilfskegel nach Aufschieben des Rotormantels auf den Rotorkern entfernt. Beispielsweise ist der Hilfskegel Teil eines später die Rotorwelle bildenden Rohteils und wird nach Aufschieben des Rotormantels abgearbeitet, beispielsweise durch eine spanabhebende Bearbeitung.

Hinsichtlich der Ausbildung des Rotormantels wurden im Zusammenhang mit der bisherigen Erläuterung bevorzugter Ausführungsbeispiele keine näheren Angaben gemacht. So sieht ein vorteilhaftes Ausführungsbeispiel vor, daß der Rotormantel durch spiralförmiges Wickeln von Fasern auf einen Wickeldorn und Einbetten derselben in eine Kunststoffmatrix hergestellt wird.

Besonders zweckmäßig ist es dabei, wenn der Rotormantel durch Wickeln von sich in axialer Richtung erstreckenden Faserlagen hergestellt wird.

Die Faserlagen könnten beispielsweise in Zylinderflächen liegen. Um eine besonders homogene Vorspannung später im Rotormantel und insbesondere in der Bandage zu erreichen, ist es jedoch vorteilhaft, wenn eine innere Faserlage des Rotorkerns mit einer konischen Lagenfläche gewickelt wird.

Diese konische Lagenfläche ist zweckmäßigerweise so ausgebildet, daß sie einen der Außenmantelfläche des Rotorkerns entsprechenden Konuswinkel aufweist.

Vorzugsweise ist die Bandage aus mehreren Faserlagen gewickelt. Aus diesem Grund ist es auch vorteilhaft, wenn die Bandage aus mehreren in konischen Lagenflächen liegenden Faserlagen hergestellt wird.

Da die erfindungsgemäß eingesetzte Bandage aus faserverstärktem Kunststoff stets sehr empfindlich ist, sieht ein besonders vorteilhaftes Ausführungsbeispiel vor, daß die Bandage auf eine Schutzschicht gewickelt wird.

Vorzugsweise wird dabei die Schutzschicht durch eine Trägerlage gebildet, die zweckmäßigerweise noch durch ein Bindemittel ihrerseits verstärkt wird und dadurch auch mit der Bandage verbunden wird.

Im einfachsten Fall ist dabei vorgesehen, daß die Bandage auf die Schutzschicht gewickelt wird.

Ein besonders vorteilhaftes Ausführungsbeispiel sieht vor, daß der Rotormantel als integrale Einheit aus Schutzschicht und Bandage durch Umwickeln der Trägerlage mit Fasern und Durchtränken der Trägerlage mit dem die Fasern der Bandage einbettenden Matrixkunststoff hergestellt wird. Das heißt, das zunächst die Trägerlage mit dem Matrixkunststoff der Bandage getränkt wird und daraufhin die Fasern, ebenfalls benetzt mit dem Matrixkunststoff, aufgewickelt werden, so daß danach eine einheitliche Kunststoffmatrix aus einem einheitlichen Material sowohl die Trägerlage durchsetzt als auch die Fasern einbettet.

Diese Einheit wird anschließend durch Aushärten des Matrixkunststoffes ein in sich stabiler fester Körper.

Zum Schutz des Rotors ist es vorteilhaft, wenn dieser noch zusätzlich mit einer Deckschicht versehen wird.

Als bevorzugtes Fasermaterial werden bei der vorliegenden Erfindung Kohlenstoffasern verwendet, so daß die Bandage einen sogenannten CFK-Werkstoff darstellen.

Da der Elastizitätsmodul der Bandage bei Verwendung von faserverstärkten Kunststoffen deutlich niedriger ist als der Elastizitätsmodul der Werkstoffe des Rotorkerns ist nicht auszuschließen, daß die auf den Rotorkern wirkende Vorspannkraft bei hoher Fliegkraftbelastung teilweise aufgehoben wird. Um dies zu verhindern, ist erfindungsgemäß ferner vorgesehen, Verbindungsbereiche zwischen der Rotorwelle, insbesondere einem die Lage aus Permanentmagneten gegebenenfalls Füllstücken tragenden Rotorwellenabschnitt und der Lage mit einer elastischen Verklebung auszubilden, wobei elastische Füllelemente in die entsprechenden Klebefugen zusätzlich eingelegt werden können. Die elastische Verklebung kann zum Beispiel aus Silikon hergestellt sein. Die Füllelemente können beispielsweise als Streifen ausgestaltet sein und aus Kunststoff bestehen, zum Beispiel aus Aramid. Die Fugendicke sollte mindestens 0,2 mm betragen.

Eine alternative Möglichkeit zur Abhilfe der genannten Probleme besteht darin, die Oberfläche des Rotorwellenabschnitts mit einer gewissen Rauhigkeit auszubilden. Auch hierdurch wird die Elastizität des Rotorkerns insgesamt erhöht. Ein Rauhigkeitswert Ra über 12,5µm (vorzugsweise 12,5 bis 25µm) hat sich als besonders vorteilhaft herausgestellt.

Weitere Merkmale und Vorteile der erfindungsgemäßen Lösung sind Gegenstand der nachfolgenden Beschreibung sowie der zeichnerischen Darstellung zweier Ausführungsbeispiele.

In der Zeichnung zeigen:
- Fig. 1: einen Längsschnitt durch ein erstes Ausführungsbeispiel;
- Fig. 2: einen Querschnitt längs Linie 2-2 in Fig. 1;
- Fig. 3: eine ausschnittsvergrößerte halbseitige Darstellung des Längsschnitts in Fig. 1 im Detail;
- Fig. 4: eine Darstellung eines Aufschiebens eines Rotormantels zur Herstellung des ersten Ausführungsbeispiels in einem Längsschnitt ähnlich Fig. 1 und
- Fig. 5: einen Querschnitt ähnlich Fig. 2 durch ein zweites Ausführungsbeispiels.

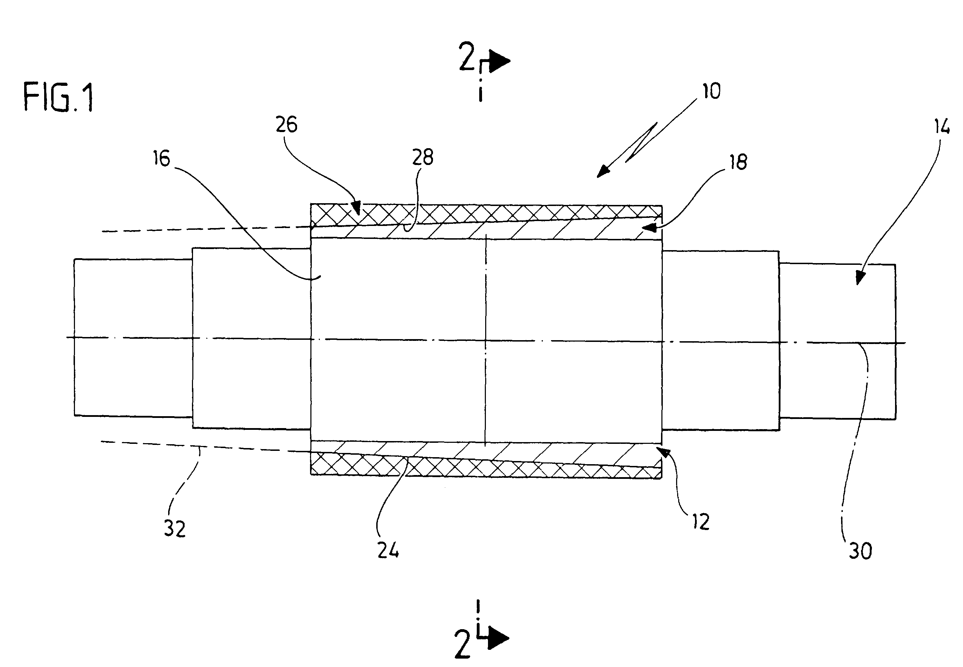

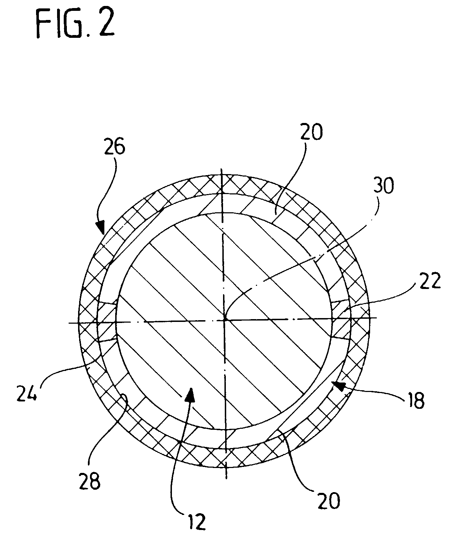

Ein als Ganzes mit 10 bezeichnetes Ausführungsbeispiel eines erfindungsgemäßen Rotors für eine elektrische Synchronmaschine, dargestellt in Fig. 1, umfaßt einen Rotorkern 12, gebildet durch eine Rotorwelle 14, welche auf einem Rotorwellenabschnitt 16 eine Magnetlage 18, gebildet durch Permanentmagnete 20 und zwischen diesen gegebenenfalls angeordneten Füllstücken 22 (Fig. 2) trägt.

Der Rotorkern 12 weist seinerseits eine Außenmantelfläche 24 auf, auf welcher ein als Ganzes mit 26 bezeichneter Rotormantel mit seiner Innenmantelfläche 28 aufliegt.

Die Außenmantelfläche 28 ist dabei so ausgebildet, daß sie in einer zu einer Drehachse 30 der Rotorwelle 14 koaxialen Kegelmantelfläche 32 liegt, wobei die Kegelmantelfläche einen Konuswinkel von weniger als 5° aufweist.

Der Rotorkern 12 wird vorzugsweise dadurch hergestellt, daß auf den Rotorwellenabschnitt 16 der Rotorwelle 14 die Magnetlage 18, bestehend aus Permanentmagneten 20 und Füllstücken 22, aufgeklebt wird und anschließend die Außenmantelfläche 24 entsprechend der Kegelmantelfläche 22 abgedreht und gegebenenfalls geschliffen wird.

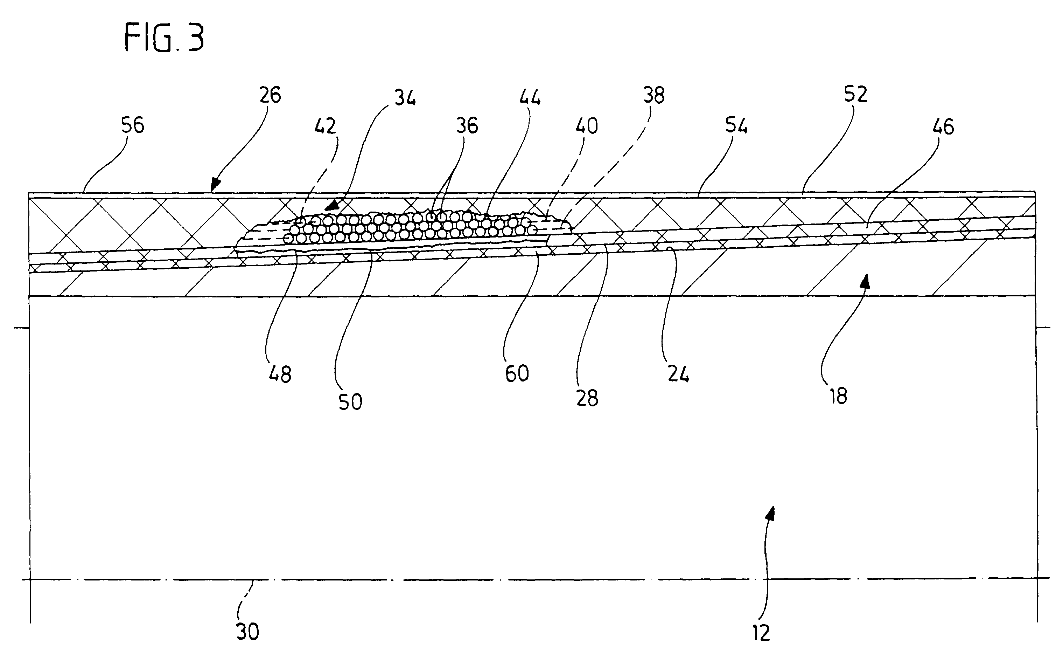

Wie in Fig. 3 dargestellt, umfaßt der Rotormantel 26 eine Bandage 34, welche aus spiralförmig gewickelten Fasern 36 aufgebaut ist, die ihrerseits in mehreren Faserlagen 38, 40 und 42 spiralförmig gewickelt sind, wobei die Faserlagen ebenfalls in Kegelmantelflächen liegen, die denselben Konuswinkel wie die Kegelmantelfläche 32 aufweisen. Ferner sind die Fasern 36 noch in eine Kunststoffmatrix 44, vorzugsweise aus Epoxidharz, eingebettet, so daß insgesamt die Bandage 34 eine faserverstärkte Kunststoffbandage darstellt, wobei als Fasern 36 vorzugsweise Kohlenstoffasern zum Einsatz kommen.

Der Rotormantel 26 umfaßt ferner noch eine Schutzschicht 46, welche von der Bandage 34 umgeben ist. Die Schutzschicht 46 ist aus einer Trägerlage 48 aufgebaut, welche von einem Bindemittel 50 durchtränkt ist, wobei das Bindemittel 50 von der Kunststoffmatrix 44 gebildet wird, die einerseits die Trägerlage 48, beispielsweise in Form eine Polyestervlieses oder eines Glasfasergewebes, verstärkt und gleichzeitig die Trägerlage 48 mit der Bandage 34 zu einem integral aufgebauten Teil vereinigt.

Ferner trägt der Rotormantel 26 noch eine die Bandage 34 umgebende Deckschicht 52, welche die Bandage auf ihrer Außenseite 54 umschließt und einen Schutzfilm bildet, der seinerseits die Bandage 34 gegen klimatische Beanspruchungen versiegelt. Gleichzeitig bildet die Deckschicht 52 eine möglichst glatte zylindrische und zur Drehachse 30 koaxiale Außenmantelfläche 56 des Rotormantels 26.

Die Innenmantelfläche 28 des Rotormantels 26 wird gebildet durch eine Innenfläche der Schutzschicht 46. Zwischen der Innenmantelfläche 28 des Rotormantels 26 und der Außenmantelfläche 24 des Rotorkerns 12 liegt ferner eine Haftvermittlerschicht 60, welche den Rotormantel 26 mit dem Rotorkern 12 verbindet und ein Abgleiten des Rotormantels 26 mit seiner Innenmantelfläche 28 auf der Außenmantelfläche 24 verhindert. Die Haftvermittlerschicht 60 ist zweckmäßigerweise aus einer ausgehärteten fließfähigen Masse hergestellt, welche sowohl mit dem Material des Rotorkerns 12 als auch dem Material des Rotormantels 26, das heißt der Schutzschicht 46, eine Klebeverbindung eingeht und damit den Rotormantel 26 auf dem Rotorkern 12 fixiert hält.

Die Herstellung des Rotormantels 46 erfolgt vorzugsweise getrennt auf einem hierfür vorgesehenen Dorn, welcher eine Dornmantelfläche aufweist, die denselben Konuswinkel wie die Kegelmantelfläche 32 aufweist, allerdings bezogen auf den Durchmesser der Kegelmantelfläche 32 ein Untermaß.

Auf die Dornmantelfläche wird zunächst die Trägerlage 48 aufgelegt und mit Bindemittel 50, das heißt dem später auch die Kunststoffmatrix 44 bildenden Kunststoff, durchtränkt. Danach erfolgt ein Aufwickeln des Faser 36 in Form mehrere Faserlagen, beispielsweise der Faserlagen 38, 40, 42 und weitere, wobei die Kohlenstoffaser 36 beim Wickeln der Faserlagen 38, 40, 42 mit dem die Kunststoffmatrix 44 bildenden Kunststoff benetzt werden. Die so hergestellte Schutzschicht 46 mit der Bandage 34 wird nun durch Aushärten der Kunststoffmatrix 44, insbesondere in einem Autoklavprozeß, ausgehärtet, wobei vorzugsweise ein Warmdurchmesser des Wickelkerns bei Aushärtetemperatur ein definiertes Untermaß gegenüber der Kegelmantelfläche 32 aufweist.

Nach dem Aushärten der Bandage 34 mit der Schutzschicht 46 erfolgt ein Überarbeiten der Außenfläche 54 der Bandage 34 um eine möglichst glatte Oberfläche zu erhalten, beispielsweise durch Überdrehen, und ein Aufbringen der abschließenden Deckschicht 52.

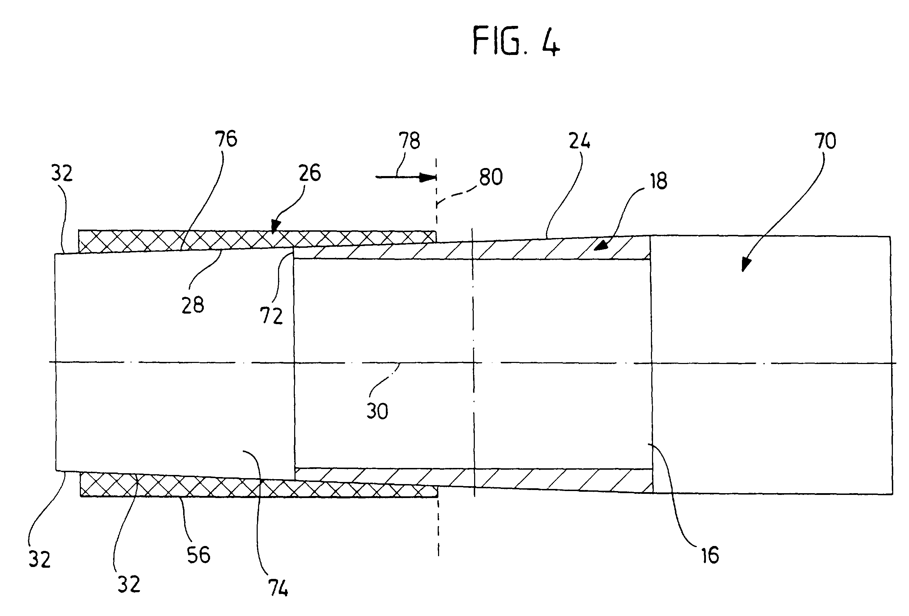

Der mit der Innenmantelfläche 28 mit Untermaß hergestellte Rotormantel 26 wird, wie in Fig. 4 dargestellt, auf die Außenmantelfläche 24 der aus den Permanentmagneten 20 und gegebenenfalls zwischen diesen sitzenden Füllstücken 22 gebildeten Magnetlage 18 aufgeschoben.

Hierzu wird ein Rohteil 70 für die spätere Rotorwelle 14 im Rotorwellenabschnitt 16 zur Aufnahme der Magnetlage 18 vorbearbeitet. Daraufhin wird nach Aufbringen der Magnetlage 18 die Außenmantelfläche 24 zur Herstellung der Kegelmantelfläche 32 bearbeitet, wobei das Rohteil 70 im Anschluß an ein Ende 72 der Magnetlage 18, welche beim Herstellen der Kegelmantelfläche den kleineren Radius bezüglich der Drehachse 30 aufweist, nach Bearbeiten des Rohteils 70 mit der Magnetlage 18 bis zur Kegelmantelfläche 32 erstreckt, so daß sich im Anschluß an das Ende 72 ein Hilfskegel 74 bildet, auf welchem sich somit die Kegelmantelfläche 32 in unmittelbarem Anschluß an die Außenmantelfläche 24 fortsetzt. Dieser Hilfskegel 74 weist kleinere Durchmesser als die Außenmantelfläche 24 auf und erleichtert somit das Aufschieben des Rotormantels 26 auf die Außenmantelfläche 24.

Um das Aufschieben des Rotormantels 26 auf den Hilfskegel 74 und die Außenmantelfläche 24 zu erleichtern, wird als Gleitfilm 76 auf der Innenmantelfläche 28 des Rotormantels 26 die später die Haftvermittlerschicht 60 bildende fließfähige Masse im fließfähigen Zustand aufgebracht.

Anschließend wird der Rotormantel 26 soweit auf den Hilfskegel 74 und die Außenmantelfläche 24 aufgeschoben, bis sich eine einer Aufschieberichtung 78 entgegenwirkende und definiert festzulegende Kraft einstellt. Diese Aufschiebestellung des Rotormantels 26 definiert eine Nullstellung 80, von welcher daraufhin ausgehend der Rotormantel 26 noch um eine ebenfalls definiert festzulegende Strecke auf die Außenmantelfläche 24 aufgeschoben wird. Durch diese definiert festzulegende Strecke ist eine definierte Vorspannung des Rotormantels, insbesondere der Bandage 34 desselben, erreichbar, welche in radialer Richtung auf den Rotorkern 12 wirkt und vorzugsweise eine in Umfangsrichtung des Rotorkerns 12 konstante Kraft erzeugt, die in radialer Richtung auf diesen einwirkt.

Um sicherzustellen, daß der Rotormantel 26 im aufgeschobenen Zustand die Lage 18 stets vollständig überdeckt, wird der Rotormantel 26 in axialer Richtung der Drehachse 30 mit Übermaß vorgefertigt.

Der aufgeschobene Rotormantel 26 wird nun relativ zum Rohteil 70 und zur Magnetlage 18 extern fixiert und die die Haftvermittlerschicht 60 bildenden fließfähige Masse ausgehärtet. Danach erfolgt ein Abdrehen des Rotormantels 26 auf die gewünschte Länge und anschließend ein Fertigdrehen des Rohteils 70 auf die für die Rotorwelle 14 gewünschte Form und somit ein Abarbeiten des Hilfskegels 74.

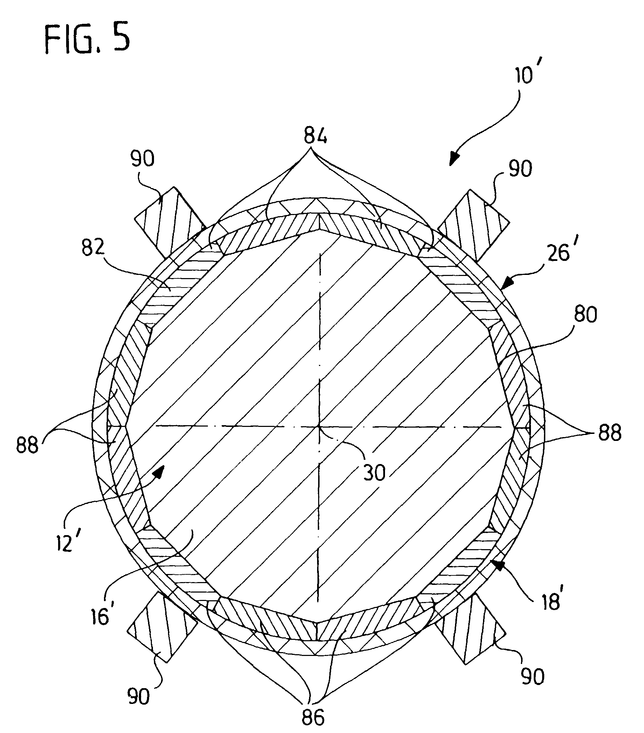

Bei einer Variante des erfindungsgemäßen Rotors, dargestellt in Fig. 5, ist der Rotorwellenabschnitt 16' polyganal ausgebildet, beispielsweise in Form eines Zwölfecks mit insgesamt 12 Flächen 80, auf welchen jeweils in Vierergruppen gegenüberliegend Permanentmagnete 82 angeordnet sind und zwar in Permanentmagnetgruppen 84, 86, welche die beiden unterschiedlichen Magnetpole (Nord/Süd) bilden. Zwischen den gegenpoligen Permanentmagnetgruppen 84, 86 sind jeweils zwei Weicheisenelemente 88 angeordnet, die die Permanentmagnetgruppen 84, 86 voneinander trennen.

Sowohl die Permanentmagnetelemente 82 als auch die Weicheisenelemente 88 erstrecken sich in axialer Richtung zur Rotorwelle 14, das heißt parallel zu deren Drehachse 30, und sind auf die entsprechenden Flächen 80 aufgeklebt. Bei der Herstellung und Konfektionierung des Rotorkerns 12' werden die Permanentmagnete 82 und die die Füllstücke bildenden Weicheisenelemente 88 nach dem Aufkleben gemeinsam abgedreht und geschliffen und zwar so, daß die Kegelmantelfläche 32 entsteht. Auf diese wird dann der Rotormantel 26' aufgeschoben, welcher - wie vorstehend bereits beschrieben - hergestellt wird.

Im Gegensatz zum ersten Ausführungsbeispiel werden allerdings auf den Rotormantel 26' Verstärkungsleisten 90, vorzugsweise insgesamt 4 Stück gleichmäßig in Umfangsrichtung verteilt, auf die Außenmantelfläche 56 des Rotormantels 26' aufgeklebt. Diese Verstärkungsleisten 90 können aus Kunststoff, ebenso aber auch aus Metall bestehen. Mit Hilfe dieser Verstärkungsleisten 90 wird nach dem Aushärten des Rotormantels 26 dieser von dem Dorn abgedrückt, ohne daß eine Belastung der Bandage 34 entsteht. Damit ist die Möglichkeit gegeben, die Bandage 34 lediglich entsprechend den aufzunehmenden radialen Zugkräften zu dimensionieren und somit dünner auszuführen, als in dem Fall, in welchem eine direkte Beaufschlagung der Bandage 34 erforderlich ist.

Darüber hinaus besteht mit den Verstärkungsleisten 90 die Möglichkeit, den Rotormantel 26 - wie bereits im Zusammenhang mit Fig. 4 beschrieben - auf die Kegelmantelfläche 32 aufzuschieben und somit die entsprechende Vorspannung im Rotormantel 26 zu erreichen.

Die Verstärkungsleisten 90 werden nach Aufschieben des Rotormantels 26 auf die Außenmantelfläche 24 entfernt, wobei bei Verwendung eines thermoplastischen Klebers zum Aufkleben der Verstärkungsleisten 90 hierfür eine Erwärmung der Verstärkungsleisten 90 genügt, um sie anschließend aufgrund der eintretenden Plastizität der Klebers, abnehmen zu können. Es besteht aber auch die Möglichkeit, die Verstärkungsleisten 90 durch Abdrehen zu entfernen.

## Patentansprüche

1. Rotor für elektrische Maschinen, insbesondere für Maschinen mit hoher Drehzahl, mit einem Rotorkern (12 und einem Rotormantel (26), welcher eine den Rotorkern radial stützende Bandage aus faserverstärktem Kunststoff umfaßt, wobei der Rotorkern (12) eine Außenmantelfläche (24) mit einem kleinen Konuswinkel aufweist, auf welcher sich der Rotormantel (26) mit einer denselben Konuswinkel aufweisenden Innenmantelfläche (28) abstützt, und wobei der Rotormantel (26) zwischen der Innenmantelfläche (28) und der Bandage (34) eine Beschädigungen und Korrosion verhindernde Schutzschicht (46) aufweist.

2. Rotor nach Anspruch 1, dadurch gekennzeichnet, daß die Beschädigungen und Korrosion verhindernde Schutzschicht (46) eine Trägerlage (48) umfaßt.

3. Rotor nach Anspruch 2, dadurch gekennzeichnet, daß die Trägerlage (48) von einem Bindemittel (50) durchsetzt ist und beide zusammen die Schutzschicht (46) bilden.

4. Rotor nach Anspruch 3, dadurch gekennzeichnet, daß das Bindemittel (50) mit einem Matrixmaterial einer die Fasern (36) der Bandage (34) einbettenden Kunststoffmatrix (44) identisch ist.

5. Rotor nach Anspruch 4, dadurch gekennzeichnet, daß die Kunststoffmatrix (44, 50) die Bandage (34) und die Trägerlage (48) als durchgängige Kunststoffmatrix durchsetzt.

6. Rotor nach einem der voranstehenden Ansprüche, dadurch gekennzeichnet, daß der Rotormantel (26) mit einer zwischen der Innenmantelfläche (28) desselben und der Außenmantelfläche (24) des Rotorkerns (12) liegenden Haftvermittlerschicht (60) auf dem Rotorkern (12) gehalten ist.

7. Rotor nach Anspruch 6, dadurch gekennzeichnet, daß die Haftvermittlerschicht (60) durch eine ausgehärtete fließfähige Masse gebildet ist.

8. Rotor nach Anspruch 7, dadurch gekennzeichnet, daß die Haftvermittlerschicht (60) bildende fließfähige Masse im nicht ausgehärteten Zustand eine Gleitschicht (76) zwischen der Außenmantelfläche (24) und der Innenmantelfläche (28) bildet.

9. Rotor nach Anspruch 7 oder 8, dadurch gekennzeichnet, daß die Masse eine den Rotorkern (12) und den Rotormantel (26) verbindende Klebemasse (60) ist.

10. Rotor nach einem der voranstehenden Ansprüche, dadurch gekennzeichnet, daß die Bandage (34) mit in radialer Richtung wirkender Vorspannung auf den Rotorkern (12) wirkt.

11. Rotor nach Anspruch 10, dadurch gekennzeichnet, daß die Bandage (34) mit einer in azimutaler Richtung im wesentlichen konstanten radialen Vorspannung auf den Rotorkern (12) wirkt.

12. Rotor nach einem der voranstehenden Ansprüche, dadurch gekennzeichnet, daß die Bandage (34) eine im wesentlichen koaxial zum Rotorkern (12) spiralförmig gewickelte Faser (36) umfaßt.

13. Rotor nach Anspruch 12, dadurch gekennzeichnet, daß die Bandage (34) spiralförmig gewickelte Faserlagen (38, 40, 42) umfaßt.

14. Rotor nach Anspruch 12 oder 13, dadurch gekennzeichnet, daß eine der Innenmantelfläche (28) zugewandte innere Faserlage (38) eine konische Lagenfläche bildet.

15. Rotor nach Anspruch 14, dadurch gekennzeichnet, daß die konische Lagenfläche (38) denselben Konuswinkel wie die Innenmantelfläche (28) aufweist.

16. Rotor nach einem der voranstehenden Ansprüche, dadurch gekennzeichnet, daß der Rotormantel (26) eine zylindrische, zum Rotorkern (12) koaxiale Außenmantelfläche (56) umfaßt.

17. Verfahren zum Herstellen eines einen Rotorkern (12) und einen Rotormantel (26) umfassenden Rotors für elektrische Maschinen, insbesondere für Maschinen mit hoher Drehzahl, dessen Rotormantel (26) eine den Rotorkern (12) radial stützende Bandage (34) aus faserverstärktem Kunststoff umfaßt, wobei der Rotorkern (12) mit einer Außenmantelfläche (24) mit einem kleinen Konuswinkel hergestellt wird, wobei der Rotormantel (26) aus einer Beschädigungen und Korrosion verhindernden Schutzschicht (46) und der Bandage (34) und mit einer denselben Konuswinkel aufweisenden Innenmantelfläche mit Untermaß gegenüber der Außenmantelfläche hergestellt wird, wobei der Rotormantel (26) zur Ausbildung einer vollflächigen gleichmäßigen Auflage mit seiner Innenmantelfläche (28) auf die Außenmantelfläche (24) des Rotors in axialer Richtung aufgeschoben wird und wobei zum Aufschieben des Rotormantels auf den Rotorkern eine aushärtbare fließfähige Masse (60) zwischen die Innenmantelfläche und die Außenmantelfläche als Gleithilfe eingebracht wird.

18. Verfahren nach Anspruch 17, dadurch gekennzeichnet, daß als fließfähige Masse (60) eine im ausgehärteten Zustand zwischen Rotormantel und Rotorkern als Klebemasse wirkende Masse verwendet wird.

19. Verfahren nach Anspruch 17 oder 18, dadurch gekennzeichnet, daß der Rotorkern an seinem den kleineren Durchmesser aufweisenden Ende mit einem eine Fortsetzung der Außenmantelfläche bildenden Hilfskegel (74) zum Aufschieben des Rotormantels versehen wird.

20. Verfahren nach Anspruch 19, dadurch gekennzeichnet, daß der Hilfskegel (74) nach Aufschieben des Rotormantels auf den Rotorkern entfernt wird.

21. Verfahren nach einem der Ansprüche 17 bis 20, dadurch gekennzeichnet, daß der Rotormantel durch spiralförmiges Wickeln von Fasern (36) auf einen Wickeldorn und Einbetten derselben in eine Kunststoffmatrix hergestellt wird.

22. Verfahren nach Anspruch 21, dadurch gekennzeichnet, daß der Rotormantel durch Wickeln von sich in axialer Richtung erstreckenden Faserlagen (38,40,42) hergestellt wird.

23. Verfahren nach Anspruch 22, dadurch gekennzeichnet, daß eine innere Faserlage (38) des Rotorkerns mit einer konischen Lagenfläche gewickelt wird.

24. Verfahren nach Anspruch 23, dadurch gekennzeichnet, daß die konische Lagenfläche einen der Außenmantelfläche des Rotorkerns entsprechenden Konuswinkel aufweist.

25. Verfahren nach einem der Ansprüche 17 bis 24, dadurch gekennzeichnet, daß die Bandage auf eine Schutzschicht (46) gewickelt wird.

26. Verfahren nach Anspruch 25, dadurch gekennzeichnet, daß die Schutzschicht durch eine Trägerlage (48) gebildet wird.

27. Verfahren nach Anspruch 26, dadurch gekennzeichnet, daß die Schutzschicht durch eine mit einem Bindemittel (50) durchsetzte Trägerlage gebildet wird.

28. Verfahren nach Anspruch 26 oder 27, dadurch gekennzeichnet, daß der Rotormantel als integrale Einheit aus Schutzschicht und Bandage durch Umwickeln der Trägerlage mit Fasern und Durchtränken der Trägerlage mit dem die Fasern der Bandage einbettenden Matrixkunststoff (44) hergestellt wird.

29. Verfahren nach einem der Ansprüche 17 bis 28, dadurch gekennzeichnet, daß der Rotormantel mit einer Deckschicht (52) versehen wird.

## Claims

1. Rotor for electric machines, in particular, for machines with high rotational speed, having a rotor core (12) and a rotor shell (26) comprising a binding made of fibre-reinforced plastics radially supporting the rotor core, the rotor core (12) having an outer shell surface (24) with a small cone angle, the rotor shell (26) being supported on the outer shell surface with an inner shell surface (28) having the same cone angle, and the rotor shell (26) having between the inner shell surface (28) and the binding (34) a protective layer (46) for preventing damage and corrosion.

2. Rotor according to claim 1, characterized in that the protective layer (46) preventing damage and corrosion comprises a carrier layer (48).

3. Rotor according to claim 2, characterized in that the carrier layer (48) is penetrated by a bonding agent (50) and both together form the protective layer (46).

4. Rotor according to claim 3, characterized in that the bonding agent (50) is identical with a matrix material of a plastics matrix (44) embedding the fibres (36) of the binding (34).

5. Rotor according to claim 4, characterized in that the plastics matrix (44, 50) penetrates the binding (34) and the carrier layer (48) as continuous plastics matrix.

6. Rotor according to any one of the preceding claims, characterized in that the rotor shell (26) is held on the rotor core (12) by an adhesion promoting layer (60) lying between the inner shell surface (28) of the rotor shell and the outer shell surface (24) of the rotor core (12).

7. Rotor according to claim 6, characterized in that the adhesion promoting layer (60) is formed by a hardened flowable substance.

8. Rotor according to claim 7, characterized in that the flowable substance forming the adhesion promoting layer (60) forms in the non-hardened state a slide layer (76) between the outer shell surface (24) and the inner shell surface (28).

9. Rotor according to claim 7 or 8, characterized in that the substance is an adhesive substance (60) connecting the rotor core (12) and the rotor shell (26).

10. Rotor according to any one of the preceding claims, characterized in that the binding (34) acts on the rotor core (12) with a bias acting in the radial direction.

11. Rotor according to claim 10, characterized in that the binding (34) acts on the rotor core (12) with a radial bias which is essentially constant in the azimuthal direction.

12. Rotor according to any one of the preceding claims, characterized in that the binding (34) comprises a fibre (36) spirally wound essentially coaxially with the rotor core (12).

13. Rotor according to claim 12, characterized in that the binding (34) comprises spirally wound fibre layers (38, 40, 42).

14. Rotor according to claim 12 or 13, characterized in that an inner fibre layer (38) facing the inner shell surface (28) forms a conical layer surface.

15. Rotor according to claim 14, characterized in that the conical layer surface (38) has the same cone angle as the inner shell surface (28).

16. Rotor according to any one of the preceding claims, characterized in that the rotor shell (26) comprises a cylindrical outer shell surface (56) coaxial with the rotor core (12).

17. Method for manufacturing a rotor for electric machines, in particular, for machines with high rotational speed, having a rotor core (12) and a rotor shell (26), the rotor shell (26) comprising a binding (34) made of fibre-reinforced plastics radially supporting the rotor core (12), the rotor core (12) being manufactured with an outer shell surface (24) having a small cone angle, the rotor shell (26) being manufactured from a protective layer (46) preventing damage and corrosion and the binding (34) and with an inner shell surface having the same cone angle and being undersized with respect to the outer shell surface, the rotor shell (26) being pushed with its inner shell surface (28) in the axial direction onto the outer shell surface (24) of the rotor so as to form a uniform contact over the entire surface, and a hardenable flowable substance (60) being inserted as sliding aid between the inner shell surface and the outer shell surface for pushing the rotor shell onto the rotor core.

18. Method according to claim 17, characterized in that a substance acting in the hardened state as adhesive substance between rotor shell and rotor core is used as flowable substance (60).

19. Method according to claim 17 or 18, characterized in that the rotor core is provided at its end having the smaller diameter with an auxiliary cone (74) forming an extension of the outer shell surface for pushing on the rotor shell.

20. Method according to claim 19, characterized in that the auxiliary cone (74) is removed after the rotor shell is pushed onto the rotor core.

21. Method according to one of claims 17 to 20, characterized in that the rotor shell is manufactured by spirally winding fibres (36) onto a winding mandrel and embedding the same in a plastics matrix.

22. Method according to claim 21, characterized in that the rotor shell is manufactured by winding fibre layers (38, 40, 42) extending in the axial direction.

23. Method according to claim 22, characterized in that an inner fibre layer (38) of the rotor core is wound with a conical layer surface.

24. Method according to claim 23, characterized in that the conical layer surface has a cone angle corresponding to the outer shell surface of the rotor core.

25. Method according to one of claims 17 to 24, characterized in that the binding is wound onto a protective layer (46).

26. Method according to claim 25, characterized in that the protective layer is formed by a carrier layer (48).

27. Method according to claim 26, characterized in that the protective layer is formed by a carrier layer penetrated by a bonding agent (50).

28. Method according to claim 26 or 27, characterized in that the rotor shell is manufactured as an integral unit consisting of protective layer and binding by winding the carrier layer with fibres and impregnating the carrier layer with the matrix plastics (44) embedding the fibres of the binding.

29. Method according to one of claims 17 to 28, characterized in that the rotor shell is provided with a cover layer (52).

## Revendications

1. Rotor pour des machines électriques, en particulier des machines à vitesse de rotation élevée, comportant un noyau de rotor (12) et une enveloppe de rotor (26) qui comprend un bandage qui est constitué en une matière plastique renforcée de fibres et qui soutient radialement le noyau de rotor, dans lequel le noyau de rotor (12) présente une surface enveloppe extérieure (24) à petit angle de cône, sur laquelle l'enveloppe de rotor (26) s'appuie par une surface enveloppe intérieure (28) présentant le même angle de cône, et dans lequel l'enveloppe de rotor (26) présente entre la surface enveloppe intérieure (28) et le bandage (34) une couche protectrice (46) qui empêche des endommagements et de la corrosion.

2. Rotor selon la revendication 1, caractérisé en ce que la couche protectrice (46) empêchant les endommagements et la corrosion comprend une couche porteuse (48).

3. Rotor selon la revendication 2, caractérisé en ce que la couche porteuse (48) est traversée par un liant (50), et en ce que les deux forment conjointement la couche protectrice (46).

4. Rotor selon la revendication 3, caractérisé en ce que le liant (50) est identique à un matériau d'une matrice de matière plastique (44) enrobant les fibres (36) du bandage (34).

5. Rotor selon la revendication 4, caractérisé en ce que la matrice de matière plastique (44, 50) traverse le bandage (34) et la couche porteuse (48) sous forme d'une matrice de matière plastique continue.

6. Rotor selon l'une quelconque des revendications précédentes, caractérisé en ce que l'enveloppe de rotor (26) est retenue sur le noyau de rotor (12) par une couche favorisant l'adhésion (60) située entre la surface enveloppe intérieure (28) de l'enveloppe de rotor (26) et la surface enveloppe extérieure (24) du noyau de rotor (12).

7. Rotor selon la revendication 6, caractérisé en ce que la couche favorisant l'adhésion (60) est formée par une masse fluide durcissable.

8. Rotor selon la revendication 7, caractérisé en ce que la masse fluide formant la couche favorisant l'adhésion (60) forme à l'état non durci une couche de glissement (76) entre la surface enveloppe extérieure (24) et la surface enveloppe intérieure (28).

9. Rotor selon l'une ou l'autre des revendications 7 et 8, caractérisé en ce que la masse est une masse collante (60) reliant le noyau de rotor (12) et l'enveloppe de rotor (26).

10. Rotor selon l'une quelconque des revendications précédentes, caractérisé en ce que le bandage (34) agit par une précontrainte active en direction radiale sur le noyau de rotor (12).

11. Rotor selon la revendication 10, caractérisé en ce que le bandage (34) agit par une précontrainte radiale sensiblement constante en direction azimutale sur le noyau de rotor (12).

12. Rotor selon l'une quelconque des revendications précédentes, caractérisé en ce que le bandage (34) comprend une fibre (36) enroulée en forme de spirale et sensiblement coaxialement au noyau de rotor (12).

13. Rotor selon la revendication 12, caractérisé en ce que le bandage (34) comprend des couches de fibres (38, 40, 42) enroulées en forme de spirale.

14. Rotor selon l'une ou l'autre des revendications 12 et 13, caractérisé en ce qu'une couche de fibre intérieure (38) orientée vers la surface enveloppe intérieure (28) forme une surface de couche conique.

15. Rotor selon la revendication 14, caractérisé en ce que la surface de couche conique (38) présente le même angle de cône que la surface enveloppe intérieure (28).

16. Rotor selon l'une quelconque des revendications précédentes, caractérisé en ce que l'enveloppe de rotor (26) comprend une surface enveloppe extérieure cylindrique coaxiale au noyau de rotor (12).

17. Procédé pour réaliser un rotor pour des machines électriques, en particulier des machines à vitesse de rotation élevée, comportant un noyau de rotor (12) et une enveloppe de rotor (26) qui comprend un bandage (34) qui est constitué en une matière plastique renforcée de fibres et qui soutient radialement le noyau de rotor (12), dans lequel le noyau de rotor (12) est réalisé avec une surface enveloppe extérieure (24) à petit angle de cône, dans lequel l'enveloppe de rotor (26) est réalisée avec une couche protectrice (46) empêchant des endommagements et de la corrosion, et où le bandage (34) et une surface enveloppe intérieure présentent le même angle de cône et une dimension inférieure à celle de la surface enveloppe extérieure, dans lequel l'enveloppe de rotor (26) est enfilée par sa surface enveloppe intérieure (28) sur la surface enveloppe extérieure (24) du rotor en direction axiale pour réaliser un appui uniforme sur toute la surface, et dans lequel une masse fluide durcissable (60) est introduite entre la surface enveloppe intérieure et la surface enveloppe extérieure en tant qu'aide au glissement pour enfiler l'enveloppe de rotor sur le noyau de rotor.

18. Procédé selon la revendication 17, caractérisé en ce que l'on utilise comme masse fluide (60) une masse agissant à l'état durci comme masse de collage entre l'enveloppe de rotor et le noyau de rotor.

19. Procédé selon l'une ou l'autre des revendications 17 et 18, caractérisé en ce que le noyau de rotor est pourvu, à son extrémité présentant le diamètre plus petit, d'un cône auxiliaire (74) formant un prolongement de la surface enveloppe extérieure pour enfiler l'enveloppe de rotor.

20. Procédé selon la revendication 19, caractérisé en ce que le cône auxiliaire (74) est enlevé après avoir enfilé l'enveloppe de rotor sur le noyau de rotor.

21. Procédé selon l'une quelconque des revendications 17 à 20, caractérisé en ce que l'enveloppe de rotor est réalisée par enroulement de fibres (36) en forme de spirale sur un mandrin d'enroulement et par enrobage de celles-ci dans une matrice de matière plastique.

22. Procédé selon la revendication 21, caractérisé en ce que l'enveloppe de rotor est réalisée par enroulement de couches de fibre (38, 40, 42) s'étendant en direction axiale.

23. Procédé selon la revendication 22, caractérisé en ce qu'une couche de fibre intérieure (38) du noyau de rotor est enroulée avec une surface de couche conique.

24. Procédé selon la revendication 23, caractérisé en ce que la surface de couche conique présente un angle de cône correspondant à celui de la surface enveloppe extérieure du noyau de rotor.

25. Procédé selon l'une quelconque des revendications 17 à 24, caractérisé en ce que le bandage est enroulé sur une couche protectrice (46).

26. Procédé selon la revendication 25, caractérisé en ce que la couche protectrice est formée par une couche porteuse (48).

27. Procédé selon la revendication 26, caractérisé en ce que la couche protectrice est formée par une couche porteuse imbibée d'un liant (50).

28. Procédé selon l'une ou l'autre des revendications 26 et 27, caractérisé en ce que l'enveloppe de rotor est réalisée comme une unité intégrale constituée par la couche protectrice et par le bandage en enroulant la couche porteuse avec des fibres et en imbibant la couche porteuse avec la matière plastique de matrice (44) enrobant les fibres du bandage.

29. Procédé selon l'une quelconque des revendications 17 à 28, caractérisé en ce que l'enveloppe de rotor est pourvue d'une couche de recouvrement (52).
